Europäisches Patentamt

European Patent Office

Office européen des brevets

(19)

(11) Veröffentlichungsnummer: **0 124 642**

**A2**

(12) EUROPÄISCHE PATENTANMELDUNG

(21) Anmeldenummer: **83110514.3**

(22) Anmeldetag: **21.10.83**

(51) Int. Cl.³: **G 05 D 13/62**

(30) Priorität: **02.04.83 DE 3312154**

(43) Veröffentlichungstag der Anmeldung:
**14.11.84 Patentblatt 84/46**

(84) Benannte Vertragsstaaten:
**AT BE CH DE FR GB LI**

(71) Anmelder: **GRUNDIG E.M.V. Elektro-Mechanische
Versuchsanstalt Max Grundig & Co. KG.
Kurgartenstrasse 37
D-8510 Fürth(DE)**

(72) Erfinder: **Schuelein, Reinhard
Humboldtstrasse 6
D-8502 Zirndorf(DE)**

(74) Vertreter: **Kolb, Max
Kurgartenstrasse 37
D-8510 Fuerth/Bayern(DE)**

(54) Drehzahlregelkreis mit automatischem Ausgleich des Teilungsfehlers eines Impulsgebers.

(57) Ein Drehzahlregelkreis, bei dem die zum Vergleich mit den Sollwerten benötigten Istwerte von einer Vorrichtung abgenommen werden, unterliegt fertigungsbedingten Toleranzen. Ein automatischer Ausgleich dieser sogenannten Teilungsfehler erfolgt dadurch, daß den einzelnen Tachoimpulsen eigene Führungsgrößen, zu deren Anspeicherung ein Speicher vorgesehen ist, zugeordnet werden, und daß diese Führungsgrößen in Abhängigkeit von der jeweils ermittelten Regeldifferenz in einem Hilfsregler ständig korrigiert und anstelle der alten Werte im Speicher abgelegt werden. Eine solche Vorregelung, die die relativen Fehler zwischen den benachbarten Tachoimpulsen erfaßt, ermöglicht eine exakte Einstellung der gewünschten Drehzahl, wie sie beispielsweise in Videorecordern zum Erhalt eines guten Bildes nötig ist.

FIG.1

EP 0 124 642 A1

# DREHZAHLREGELKREIS MIT AUTOMATISCHEM AUSGLEICH DES TEILUNGSFEHLERS EINES IMPULSGEBERS

BESCHREIBUNG:

Die Erfindung bezieht sich auf einen Drehzahlregelkreis für den Ausgleich des Teilungsfehlers eines Impulsgebers, mit einem Eingang, an dem eine Führungsgröße zur Verfügung steht, mit einem Vergleicher zum Vergleich von Ist- und Sollwerten und mit einem Speicher zur Abspeicherung von einzelnen, den Tachoimpulsen zugeordneten Werten.

Das Bedürfnis für die Erfindung besteht insbesondere bei Geräten der Unterhaltungselektronik, wie z.B. bei Videorecordern zur Aufrechterhaltung einer konstanten Drehzahl des Kopfrades.

Aus der DE-OS 23 36 198 ist ein Drehzahlregelkreis bekannt, bei dem zur Regelung u.a. zwei Zahnradkränze mit identischer Anzahl $n_1$ von äquidistanten Zähnen verwendet werden. Dabei wird der äußere Zahnradkranz fest an eine Drehfrequenzdetektorschaltung angeschlossen und der innere mit der Welle ververbundene Zahnradkranz auf Masse gelegt. Die zwischen den beiden Zahnradkränzen ausgebildete elektrostatische Kapazität hat bei der Drehung der Welle mit der Frequenz $n_2$ eine Frequenz, die dem Produkt aus $n_1$ und $n_2$ entspricht. Änderungen der Drehzahl bewirken Änderungen der elektrostatischen Kapazität, die mit Hilfe einer Detektorschaltung festgestellt und an einen Frequenzdiskriminator weitergeleitet werden, der die Drehzahländerungen in Spannungssignale umsetzt, die zur Regelung der Drehzahl verwendet werden.

Ein großer Nachteil dieser Anordnung besteht darin, daß die zu einer genauen Regelung, wie sie z.B. bei der Drehzahlregelung in den heutigen Videorecordern erforderlich ist, nötige exakt äquidistante Verteilung der Zähne des Zahnradkranzes an der sich drehenden Welle aufgrund von Fertigungstoleranzen nicht gewährleistet werden kann.

Des weiteren sind aus der DE-OS 30 36 830, deren Aufgabe in der Verbesserung der Auflösung besteht, Meßsysteme bekannt, bei denen Korrekturwerte mit Zwischenwerten, die durch Interpolation aus den Meßwerten gewonnen wurden, verglichen werden. Die Korrekturwerte werden bei einer ersten Ausführungsform des in der DE-OS 30 36 830 vorgestellten Verfahrens durch Vorabmessung ermittelt, in einen Festwertspeicher abgelegt und in einer Korrektureinrichtung den Zwischenwerten aus dem Interpolator überlagert und dann einer Auswertestufe zugeführt. Bei einer zweiten Ausführungsform werden die aus dem Interpolator kommenden Zwischenwerte mit den in einem hochgenauen Referenzmeßsystem ermittelten Werten verglichen und die Differenz als Korrekturwert in einem Speicher abgelegt. Diese Korrekturwerte gelangen ebenso wie die Zwischenwerte aus dem Interpolator in ein Korrekturglied, dessen Ausgangssignal zur Anzeige gebracht wird.

Auf diese Weise gelang es, durch Interpolation die Auflösung in einem Meßsystem zu vergrößern und die systematischen Fehler des Meßsystems zu verkleinern. Dazu mußten jedoch bei der ersten Ausführungsform die Korrekturwerte durch eine Vorabmessung ermittelt werden, was einen zusätzlichen Arbeitsaufwand bedeutet. Bei der zweiten Ausführungsform ist zur Erzielung hoher Genauigkeiten ein hochgenaues Referenzmeßsystem erforderlich.

Aus der US-Patentschrift 4 061 950 ist eine Anordnung gemäß Oberbegriff des Anspruchs 1 bekannt, die die fertigungsbedingten Fehler eines
Drehzahlregelkreises mit Hilfe eines Impulsbreitenmodulators ausgleicht.

Diesem werden als Eingangsgrößen zum einen die
aufgrund von Fertigungstoleranzen nicht äquidistanten Impulse eines an der sich drehenden Welle befestigten Zahnradkranzes, die von einem fotoelektrischen Element abgenommen werden und zum
andern pro Vollumdrehung ein Impuls, der von einem zweiten fotoelektrischen Element von einem
gesondert an der Welle befestigten einzelnen Zahn
herrührt, zugeführt.

Der Impulsbreitenmodulator besteht aus einem
Schieberegister, monostabilen Multivibratoren
mit manuell einstellbaren Zeitkonstanten und einem ODER-Gatter. Die manuell einstellbaren Zeitkonstanten werden bereits im Anschluß an die Fertigung mit Hilfe eines Oszillographen so eingestellt, daß am Ausgang des Impulsbreitenmodulators ein Impulszug entsteht, dessen Impulse in
ihrer Breite so moduliert werden, daß entweder die Abstände der abfallenden Flanken aufeinanderfolgender Impulse oder die Abstände zwischen abfallender Flanke des Vorgängerimpulses und ansteigender Flanke des darauffolgenden Impulses
jeweils gleich sind. Dieser Impulszug, bei dem
die fertigungsbedingten Unzulänglichkeiten nicht
mehr erkennbar sind, dient als Istsignal und wird
zur weiteren Verarbeitung einem Schaltkreis zugeführt, der aus diesem Impulszug eine geschwindigkeitsabhängige Spannung erzeugt, die zum Vergleich
mit dem Sollwert herangezogen wird. Auf diese Art
können also durch manuelle Einstellung der Zeitkonstanten von monostabilen Multivibratoren die
Fertigungstoleranzen bei der Herstellung von Zahnradkränzen ausgeglichen werden.

Demgegenüber hat die vorliegende Erfindung die
Aufgabe, einen Drehzahlregelkreis zu schaffen,
bei dem eine hohe Genauigkeit durch automatisches
Ausregeln des Teilungsfehlers eines Impulsgebers
unabhängig von der jeweiligen Drehzahl erreicht
wird und ohne daß Impulsgeber hoher Genauigkeit
oder andere aufwendige Zusatzelemente nötig sind.

Die Lösung der Aufgabe erfolgt bei einem Drehzahlregelkreis der eingangs erwähnten Art gemäß

6

der Erfindung durch die im kennzeichnenden Teil des Anspruchs 1 angegebenen Maßnahmen.

Die Vorteile der Erfindung liegen insbesondere darin, daß zum Erreichen der exakten Drehzahlwerte, wie sie z.B. in den heutigen Videorecordern nötig sind, die fertigungsbedingten Toleranzen der Impulsgebervorrichtung automatisch eliminiert werden können und keine Impulsgeber mit hoher Genauigkeit erforderlich sind. Es ist weiterhin keine äquidistante Verteilung der Meßinkremente nötig. Da der im erfindungsgemäßen Drehzahlregelkreis vorhandene Speicher und die Ablaufsteuerung in den heute überall verwendeten integrierten Schaltungen ohnehin vorhanden sind, entstehen bei der Anwendung der Erfindung nahezu keine zusätzlichen Kosten. Weiterhin ist der Drahzahlregelkreis nach der Erfindung in der Lage, sich automatisch jeder gewünschten Drehzahl anzupassen.

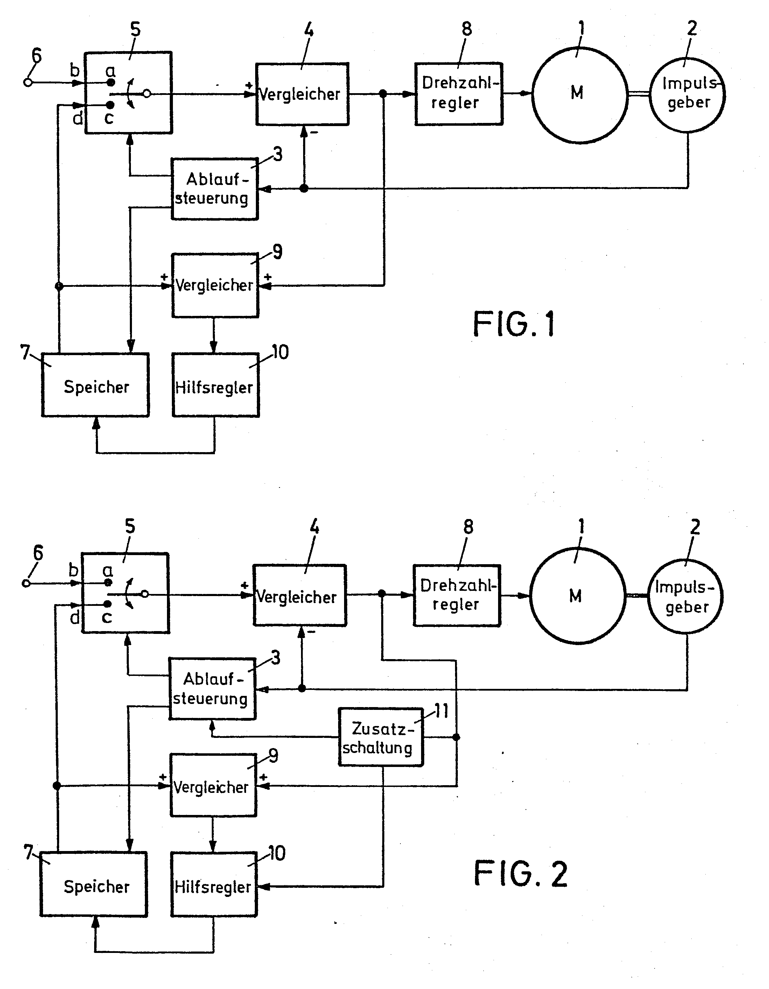

Die Erfindung wird nachfolgend unter Bezugnahme auf das aus der Fig. 1 ersichtliche Ausführungsbeispiel näher erläutert.

7

SCHALTUNGSBESCHREIBUNG:

Das anzutreibende Element, z.B. das Kopfrad eines Videorecorders, wird von einem Motor (1) angetrieben. Von der den Motor mit dem anzutreibenden Element verbindenden Welle werden bei Drehung der Welle mit Hilfe einer Impulsgebervorrichtung (2) Impulse abgenommen, die der Ablaufsteuerung (3) und mit negativem Vorzeichen dem Addierer (4) zugeführt werden. An einem weiteren Eingang des Addierers (4) liegen die über einen Schalter (5), der von der Ablaufsteuerung (3) gesteuert wird, zugeschalteten Sollwerte. Der im Falle einer Schalterstellung a über den Eingang (b) des Schalters (5) am Addierer (4) anliegende Sollwert stammt von einem Eingang (6), z.B. aus einem Festwertspeicher oder von einer externen Tastatur. Der im Falle einer Schalterstellung c über den Eingang (d) des Schalters (5) am Addierer (4) anliegende Sollwert wird einem Speicher (7) entnommen. Das Ausgangssignal des Addierers (4) dient als Eingangssignal eines weiteren Addierers (9), dem ausserdem ein Wert aus dem Speicher (7) zugeführt wird. Weiterhin wird das Ausgangssignal des Addierers (4) einem Drehzahlregler (8) zugeführt, der ein für die Regelung des Motors (1) geeignetes Signal erzeugt. Dieses wird dann dem Motor (1) zuge-

$\rho$

führt. Das im Addierer (9) ermittelte Summensignal aus dem Ausgangssignal des Addierers (4)
und einem Wert des Speichers (7) gelangt an einen Hilfsregler (10). Das Ausgangssignal des
Hilfsreglers (10) wird erneut im Speicher (7)
abgelegt. Das Ein- und Auslesen der Werte in
den Speicher (7) bzw. aus dem Speicher (7) wird
von der Ablaufsteuerung gesteuert.

FUNKTIONSBESCHREIBUNG:

Im folgenden sei die Funktionsweise der Erfindung anhand des aus der Zeichnung ersichtlichen
Ausführungsbeispiels beschrieben.

Die von einer Lichtquelle im Impulsgeber (2) erzeugten Lichtimpulse werden von den Zähnen eines
an der sich drehenden Welle befestigten Zahnradkranzes reflektiert und von einem Lichtdetektor
im Impulsgeber (2) registriert. Vom Ausgang des
Impulsgebers (2) gelangen diese Ist-Impulse, die
eine Information über die Momentangeschwindigkeit
der sich drehenden Welle beinhalten, einerseits
an die Ablaufsteuerung (3) und andererseits mit
negativem Vorzeichen an den Addierer (4).

Am anderen Eingang des Addierers (4) liegen die
über einen Schalter (5) angelegten Sollwerte.

Beim Eintreffen des ersten Ist-Impulses legt
die Ablaufsteuerung (3) den Schalter (5) in
die Stellung a, so daß am Addierer (4) die am
Eingang (b) des Schalters anliegende, z.B. von einem
externen Eingang (6) stammende Führungsgröße einer Vollumdrehung anliegt. Diese Führungsgröße
einer Vollumdrehung entspricht dem Sollwert für
eine Vollumdrehung. Der Vergleich mit dem zugehörigen Ist-Wert liefert eine Information über
den absoluten Drehzahlfehler.

Da jeweils der erste eintreffende Ist-Impuls als
Referenzimpuls für eine Vollumdrehung herangezogen wird, ist es ohne Belang, in welcher Stellung
sich der sich drehende Körper nach Abschluß seiner letzten Drehbewegung befand. Beim Eintreffen
der weiteren Ist-Impulse legt die Ablaufsteuerung
(3) den Schalter (5) in die Stellung c, so daß
am Addierer (4) die am Eingang (d) des Schalters
anliegenden Führungsgrößen für die weiteren Tachoimpulse anliegen. Dabei ist jedem Tachoimpuls
genau ein Wert aus dem Speicher (7) als Führungsgröße zugeordnet. Die Ablaufsteuerung (3) sorgt
dafür, daß die zum jeweils eintreffenden Istimpuls gehörige Führungsgröße aus dem Speicher (7)
geholt und an den Eingang (d) des Schalters (5)
gelegt wird.

Der Addierer (4) ermittelt aus dem Sollwert und dem mit negativem Vorzeichen angelegten Istwert die Regeldifferenz. Diese wird einem Drehzahlregler (8) zugeführt, der die Regeldifferenz in ein Signal umwandelt, das zur Regelung der Drehgeschwindigkeit an den Motor weitergeleitet wird.

Weiterhin gelangt die im Addierer (4) berechnete Regeldifferenz an einen Addierer (9), dem außerdem die zum jeweiligen Tachoimpuls gehörige Führungsgröße aus dem Speicher (7) zugeführt wird.

Das im Addierer (9) ermittelte Summensignal aus der Führungsgröße und der Regeldifferenz liegt am Eingang eines Hilfsreglers (10), der vorzugsweise ein I-Regler mit einer größeren Zeitkonstanten als der Drehzahlregelkreis (8) ist, an. In diesem wird bei einer von Null verschiedenen Regeldifferenz die Führungsgröße für den jeweiligen Tachoimpuls korrigiert und der neue Wert anstelle des alten Wertes im Speicher (7) abgelegt. Das Ablegen der neu berechneten Werte im Speicher (7) wird von der Ablaufsteuerung (3) gesteuert.

Somit wird der relative Zeitfehler zwischen benachbarten Impulsen erfaßt, ausgeregelt und damit

11

der Einfluß des Teilungsfehlers des Impulsgebers automatisch durch eine Vorregelung der
Führungsgrößen für die einzelnen Tachoimpulse
eliminiert.

Eine vorteilhafte Weiterbildung der Erfindung
wird nachfolgend unter Bezugnahme auf das aus
der Fig. 2 ersichtliche Ausführungsbeispiel erläutert.

In diesem Beispiel wird die im Addierer (4) ermittelte Regeldifferenz dem Drehzahlregler (8),
dem Addierer (9) und einer Zusatzschaltung (11)
zugeführt, die den Betrag der Regeldifferenz
überwacht. Damit besteht die Möglichkeit, den
Hilfsregelkreis erst dann zuzuschalten, wenn die
Regeldifferenz betragsmäßig eine bestimmte Schranke unterschreitet, oder die Regelgeschwindigkeit
des Hilfsreglers (10) umzuschalten.

Dies ist vor allem von Bedeutung für die Anlaufphase. In dieser wird die jeweils berechnete Regeldifferenz anfänglich einen sehr großen Wert
annehmen, der die bestimmte Schranke überschreitet. Deshalb ist der Hilfsregelkreis (10) nicht
zugeschaltet und eine Drehzahlregelung in dieser
Phase findet nur unter Verwendung eines immer wieder von demselben Zahn des Zahnradkranzes abgenommenen Impulses statt. Erst wenn die gewünschte Solldrehzahl einen bestimmten Wert erreicht hat, wird die Regeldifferenz kleiner als die Schranke und der Hilfsregelkreis wird zugeschaltet oder die Regelgeschwindigkeit des Hilfsreglers (10) wieder rückumgeschaltet.

Die Erfindung bietet weiterhin die Möglichkeit, eine wählbare Anzahl von Tachoimpulsen zur Regelung zu verwenden, d.h. die Genauigkeit der Regelung den jeweiligen Erfordernissen anzupassen. In diesem Falle wird nur ein Teil der Tachoimpulse mit dem zugehörigen Sollwert verglichen und zur Regelung verwendet.

Ferner besteht die Möglichkeit, die Speicherplätze des Speichers (7) schon vor dem Eintreffen des ersten Istimpulses mit von der jeweiligen Solldrehzahl abhängigen Idealwerten für die Führungsgrößen der Tachoimpulse vorzubelegen. Dadurch wird eine schnellere Regelung erreicht.

Beim heutigen Stand der Technik werden entweder alle oder zumindest ein Teil dieser Vorgänge von einem Mikrocomputer übernommen.

DREHZAHLREGELKREIS MIT AUTOMATISCHEM AUSGLEICH
DES TEILUNGSFEHLERS EINES IMPULSGEBERS

PATENTANSPRÜCHE:

1.   Drehzahlregelkreis für den Ausgleich des Teilungsfehlers eines Impulsgebers, mit einem Eingang, an dem eine Führungsgröße zur Verfügung steht, mit einem Vergleicher zum Vergleich von Ist- und Sollwerten und mit einem Speicher zur Abspeicherung von einzelnen, den Tachoimpulsen zugeordneten Werten, dadurch gekennzeichnet, daß eine Vorregelung erfolgt, bei der die den einzelnen Tachoimpulsen zugeordneten Werte als Führungsgrößen dienen, die unter Verwendung der Regeldifferenz in einem Hilfsregler (10) ständig korrigiert werden, die korrigierten Führungsgrößen anstelle der alten Führungsgrössen im Speicher (7) abgelegt werden und eine Umschaltvorrichtung (5) vorhanden ist, über die die Führungsgrößen als Sollwerte zum Vergleich mit den Istwerten an einen Vergleicher (4) gelegt werden.

2.    Drehzahlregelkreis nach Anspruch 1, dadurch gekennzeichnet, daß eine Zusatzschaltung (11) mit einem Vergleicher vorgesehen ist, die die Anlaufphase überwacht und den Hilfsregelkreis erst dann zuschaltet, wenn die Regeldifferenz eine bestimmte Schranke unterschreitet.

3.    Drehzahlregelkreis nach Anspruch 1 oder 2, dadurch gekennzeichnet, daß die Regelung, das Abspeichern der Führungsgrößen im Speicher (7), das Auslesen der Führungsgrößen aus dem Speicher und die Adaption der Regler (8, 10) teilweise oder vollständig von einem Mikrocomputer übernommen wird.

4.    Drehzahlregelkreis nach einem oder mehreren der Ansprüche 1 bis 3, dadurch gekennzeichnet, daß der Hilfsregelkreis (10) ein I-Regler mit einer größeren Zeitkonstante ist als der Drehzahlregelkreis (8).

5.    Drehzahlregelkreis nach einem oder mehreren der Ansprüche 1 bis 4, dadurch gekennzeichnet, daß die am Eingang (6) anliegende Führungsgröße aus einem Festwertspeicher stammt.

6.    Drehzahlregelkreis nach einem oder mehreren der Ansprüche 1 bis 4, dadurch gekennzeichnet, daß die am Eingang (6) anliegende Führungsgröße an einer externen Tastatur eingegeben wird.

7. Drehzahlregelkreis nach einem oder mehreren der Ansprüche 1 bis 6, dadurch gekennzeichnet, daß der Speicher (7) genau (n - 1) Speicherplätze aufweist, wenn n die Anzahl der pro Vollumdrehung auftretenden Tachoimpulse ist.

8. Drehzahlregelkreis nach einem oder mehreren der Ansprüche 1 bis 7, dadurch gekennzeichnet, daß nur eine wählbare Anzahl von Tachoimpulsen zur Regelung verwendet wird.

9. Drehzahlregelkreis nach einem oder mehreren der Ansprüche 1 bis 8, dadurch gekennzeichnet, daß die Speicherplätze des Speichers (7) anfänglich mit Idealwerten für die Führungsgrößen der Tachoimpulse belegt werden.

10. Drehzahlregelkreis nach einem oder mehreren der Ansprüche 1 bis 9, dadurch gekennzeichnet, daß die Regelgeschwindigkeit des Hilfsreglers (10) umschaltbar ist.

FIG.1

FIG. 2

0124642